# FASCICULE DE BREVET EUROPEEN

(11) **EP 2 516 177 B1**
(45) Date de publication et mention de la délivrance du brevet: **23.04.2014**
(21) Numéro de dépôt: 10798288.6
(22) Date de dépôt: 14.12.2010
(51) Int. Cl.: B60C 1/00, C08K 5/07, C08K 13/02, C08L 9/00

(54) **ARTICLE NOTAMMENT PNEUMATIQUE AVEC MELANGE DE CAOUTCHOUC EXTERNE COMPORTANT UN SEL DE LANTHANIDE**
FORMTEILE, INSBESONDERE EIN FAHRZEUGLUFTREIFEN BESTEHEND AUS EINER AEUSSEREN KAUTSCHUKMISCHUNG, WELCHE EIN LANTHANID SALZ BEINHALTET
ARTICLE, PARTICULARLY A PNEUMATIQUE TIRE BASED ON A EXTERNAL RUBBER MIXTURE COMPRISING A LANTHANIDE SALT

(30) Priorité: 22.12.2009 FR 0959346
(43) Date de publication de la demande: 31.10.2012
(73) Titulaire: Compagnie Générale des Etablissements Michelin, 63000 Clermont-Ferrand (FR); MICHELIN Recherche et Technique S.A., 1763 Granges-Paccot (CH)
(72) Inventeur: SALGUES, Nathalie, F-63200 Riom (FR); CABIOCH, Jean-Luc, F-63119 Chateaugay (FR); MAKIUCHI, Kazumi, Yokkaichi-shi Mie 510-0957 (JP)
(74) Mandataire: Sidhu, Alban
(86) Numéro de dépôt international: PCT/EP2010/069636
(87) Numéro de publication internationale: WO 2011/076619

(56) Documents cités:
- WO-A1-2005/113666
- FR-A1- 2 854 100
- FR-A1- 2 900 156
- US-A- 3 803 053

## Description

### 1. DOMAINE DE L'INVENTION

Le domaine de la présente invention est celui des articles finis en caoutchouc, en particulier des pneumatiques pour véhicules, et des mélanges ou profilés en caoutchouc utilisés pour la fabrication de tels articles ou pneumatiques.

La présente invention est plus particulièrement relative aux agents antidégradants utilisés pour protéger ces mélanges en caoutchouc contre le vieillissement dû à l'oxydation lorsqu'ils sont au contact de l'air.

### 2. ETAT DE LA TECHNIQUE

Comme on le sait, les vulcanisats de caoutchoucs diéniques essentiellement insaturés, naturels comme synthétiques, en raison de la présence de doubles liaisons sur leurs chaînes moléculaires, sont susceptibles de se détériorer plus ou moins rapidement après une exposition prolongée à l'atmosphère, s'ils ne sont pas protégés, en raison de mécanismes connus d'oxydation. Ces mécanismes complexes ont été rappelés par exemple dans les documents brevets WO 99/02590 et WO 99/06480. Ils entraînent, suite à des ruptures de ces doubles liaisons et à l'oxydation des ponts de soufre, une rigidification et une fragilisation des vulcanisats, dégradation qui est en outre accélérée sous l'action conjuguée de la chaleur par "thermo-oxydation", ou encore de celle de la lumière par "photo-oxydation".

Ces phénomènes d'oxydation ont pu être peu à peu inhibés grâce à la mise au point et commercialisation de divers agents antioxydants dont notamment des dérivés de la p-phénylènediamine ("PPD" ou "PPDA") tels que par exemple la N-isopropyl-N'-phényl-p-phénylènediamine ("I-PPD") ou N-1,3-diméthylbutyl-N'-phényl-p-phénylènediamine ("6-PPD"), des dérivés de la quinoléine ("TMQ"), à la fois excellents antioxydants et antiozonants (voir par exemple demandes de brevet WO 2004/033548, WO 2005/063510, WO 2005/133666). Ces antioxydants sont aujourd'hui utilisés de manière systématique dans les compositions de caoutchouc diénique, en particulier dans les compositions pour pneumatiques, afin de combattre le vieillissement et une usure prématurée de ces derniers.

L'inconvénient bien connu de ces antioxydants est que leur concentration dans les compositions de caoutchouc diminue naturellement au cours du temps de par leur fonction chimique même, qu'ils ont en outre une forte propension naturelle à migrer des zones plus concentrées vers les zones moins concentrées en antioxydant, tant et si bien que l'homme du métier est conduit à utiliser des quantités relativement importantes de produit, ce qui est relativement coûteux et par ailleurs nuisible à l'aspect des produits finis en raison d'un fort pouvoir tachant d'un grand nombre d'agents antioxydants, notamment des dérivés de la p-phénylènediamine.

Pour pallier les inconvénients ci-dessus et ainsi améliorer encore la protection et la résistance au vieillissement des pneumatiques, il a été proposé notamment d'incorporer à ces pneumatiques des couches supplémentaires de caoutchouc, à haute concentration en antioxydant, fonctionnant en quelque sorte comme des réservoirs à antioxydant susceptibles de délivrer l'antioxydant au fil du temps, par migration, en fonction du degré d'appauvrissement des zones adjacentes (voir par exemple les documents brevet WO 2009/029114, EP 1 319 527 ou US 7 082 976).

L'utilisation de tels réservoirs à antioxydant, bien qu'efficace, présente toutefois l'inconvénient de devoir modifier la structure interne des pneumatiques et par conséquent de rendre notamment leur fabrication plus complexe et plus coûteuse.

Aussi, les concepteurs d'articles en caoutchouc diénique, notamment les manufacturiers de pneumatiques, sont à la recherche aujourd'hui de solutions nouvelles simples qui permettent de pallier, au moins en partie, les inconvénients précités.

### 3. BREVE DESCRIPTION DE L'INVENTION

Au cours de leurs recherches, les Demanderesses ont découvert une formulation de caoutchouc spécifique qui, au cours de son vieillissement, a la particularité de consommer moins d'antioxydant et qui par conséquent permet de répondre à l'objectif ci-dessus.

En conséquence, un premier objet de l'invention concerne un article comportant au moins un mélange externe en caoutchouc, ledit mélange externe comportant une composition de caoutchouc à base d'au moins un élastomère diénique, une charge renforçante, un système de réticulation, entre 0,2 et 10 pce d'un antioxydant et entre 0,2 et 10 pce d'acétylacétonate de lanthanide.

Grâce à la présence de l'acétylacétonate spécifique ci-dessus, on a observé de manière inattendue une réduction notable de la consommation d'antioxydant dans la composition de caoutchouc, au cours du vieillissement de cette dernière.

La longévité des vulcanisats en caoutchouc peut être ainsi améliorée, en particulier celle des pneumatiques qui peuvent être soumis on le sait à des conditions de roulage particulièrement sévères, notamment sous atmosphère humide et corrosive.

La demande WO 2005/113666 déposée par les Demanderesses avait certes déjà décrit l'utilisation spécifique d'acétylacétonate de lanthanide dans des compositions de caoutchouc pour pneumatiques, mais dans des mélanges internes de calandrage de renforts métalliques (i.e., des nappes de caoutchouc renforcées par des éléments de renforcement métalliques) dans le but d'améliorer les performances d'adhésion du métal au caoutchouc. Mais les mélanges externes de pneumatiques dont nous parlons ici, comme par exemple des bandes de roulement ou des flancs, sont de manière connue dépourvues de tels renforts métalliques.

La présente invention concerne particulièrement les pneumatiques destinés à équiper des véhicules à moteur de type tourisme, SUV (*"Sport Utility Vehicles"*), deux roues (notamment vélos, motos), avions, comme des véhicules industriels choisis parmi camionnettes, "Poids-lourd" - c'est-à-dire métro, bus, engins de transport routier (camions, tracteurs, remorques), véhicules hors-la-route tels qu'engins agricoles ou de génie civil -, autres véhicules de transport ou de manutention.

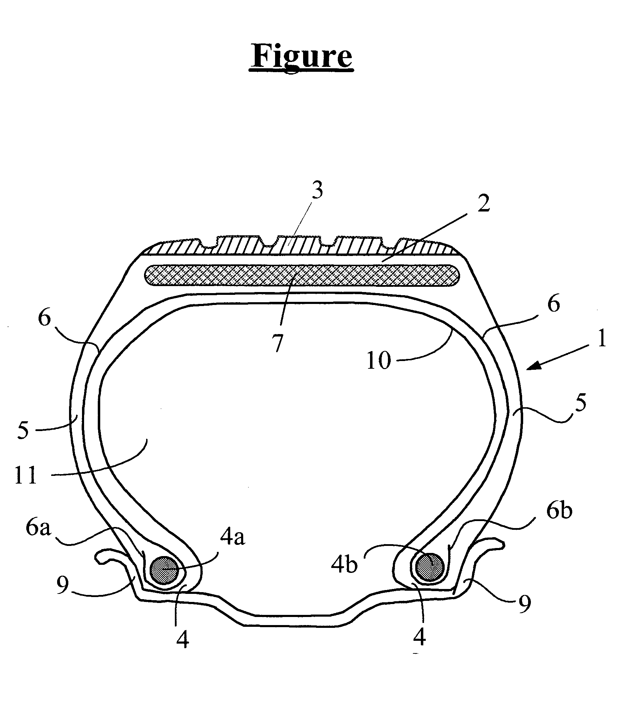

L'invention ainsi que ses avantages seront aisément compris à la lumière de la description et des exemples de réalisation qui suivent, ainsi que de la figure unique relative à ces exemples qui schématise en coupe radiale, un pneumatique à armature de carcasse radiale conforme à l'invention.

### 4. MESURES ET TESTS UTILISES

Les compositions de caoutchouc sont caractérisées, avant et après cuisson, comme indiqué ci-après.

### 4.1 - Plasticité Mooney

On utilise un consistomètre oscillant tel que décrit dans la norme française NF T 43-005 (1991). La mesure de plasticité Mooney se fait selon le principe suivant : la composition à l'état cru (i.e., avant cuisson) est moulée dans une enceinte cylindrique chauffée à 100°C. Après une minute de préchauffage, le rotor tourne au sein de l'éprouvette à 2 tours/minute et on mesure le couple utile pour entretenir ce mouvement après 4 minutes de rotation. La plasticité Mooney (ML 1+4) est exprimée en "unité Mooney" (UM, avec 1 UM = 0.83 N.m).

### 4.2 - Essais de traction

Ces essais permettent de déterminer les contraintes d'élasticité et les propriétés à la rupture. Sauf indication différente, ils sont effectués conformément à la norme française NF T 46-002 de septembre 1988. Les mesures de module ont été effectuées en traction, sauf indication expresse différente selon la norme ASTM D 412 de 1998 (éprouvette "C") ; on mesure en seconde élongation (i.e., après un cycle d'accommodation) les modules sécants nominaux (ou contraintes apparentes) à 10%, 100% et 300% d'allongement, notés respectivement MA10, MA100 et MA300 et exprimés en MPa (conditions normales de température et d'hygrométrie selon la norme ASTM D 1349 de 1999). On mesure également les contraintes à la rupture (en MPa) et les allongements à la rupture (en %). Toutes ces mesures de traction sont effectuées dans les conditions normales de température (23 ± 2°C) et d'hygrométrie (50 ± 5% d'humidité relative), selon la norme française NF T 40-101 (décembre 1979).

### 5. DESCRIPTION DETAILLEE DE L'INVENTION

Dans la présente description, sauf indication expresse différente, tous les pourcentages (%) indiqués sont des % en masse. L'abréviation "pce" (en anglais "*phr*") signifie parties en poids pour cent parties d'élastomère ou caoutchouc (du total des élastomères si plusieurs élastomères sont présents).

D'autre part, tout intervalle de valeurs désigné par l'expression "entre a et b" représente le domaine de valeurs supérieur à "a" et inférieur à "b" (c'est-à-dire bornes a et b exclues) tandis que tout intervalle de valeurs désigné par l'expression "de a à b" signifie le domaine de valeurs allant de "a" jusqu'à "b" (c'est-à-dire incluant les bornes strictes a et b).

L'article en caoutchouc, en particulier pneumatique, de l'invention comprend donc au moins un mélange de caoutchouc externe comportant une composition de caoutchouc à base (i.e., comportant le mélange ou le produit de réaction) d'au moins un élastomère diénique, une charge renforçante, un système de réticulation, entre 0,2 et 10 pce d'un antioxydant ; elle a en outre pour caractéristique nouvelle et essentielle de comporter entre 0,2 et 10 pce d'un acétylacétonate de lanthanide.

### 5.1 - Elastomère diénique

Par élastomère (ou indistinctement caoutchouc) "diénique", on entend de manière connue un élastomère issu au moins en partie (i.e., un homopolymère ou un copolymère) de monomères diènes (monomères porteurs de deux doubles liaisons carbone-carbone, conjuguées ou non). Les élastomères diéniques peuvent être classés de manière connue en deux catégories : ceux dits "essentiellement insaturés" et ceux dits "essentiellement saturés". De manière générale, on entend ici par élastomère diénique "essentiellement insaturé" un élastomère diénique issu au moins en partie de monomères diènes conjugués, ayant un taux de motifs ou unités d'origine diénique (diènes conjugués) qui est supérieur à 15% (% en moles). C'est ainsi, par exemple, que des élastomères diéniques tels que les caoutchoucs butyle ou les copolymères de diènes et d'alpha-oléfines type EPDM n'entrent pas dans la définition précédente et peuvent être notamment qualifiés d'élastomères diéniques "essentiellement saturés" (taux de motifs d'origine diénique faible ou très faible, toujours inférieur à 15%). Dans la catégorie des élastomères diéniques "essentiellement insaturés", on entend en particulier par élastomère diénique "fortement insaturé" un élastomère diénique ayant un taux de motifs d'origine diénique (diènes conjugués) qui est supérieur à 50%.

Ces définitions étant données, on entend plus particulièrement par élastomère diénique susceptible d'être mis en oeuvre dans les compositions conformes à l'invention :
(a) - tout homopolymère obtenu par polymérisation d'un monomère diène conjugué, ayant de préférence de 4 à 12 atomes de carbone ;
(b) - tout copolymère obtenu par copolymérisation d'un ou plusieurs diènes conjugués entre eux ou avec un ou plusieurs composés vinyle aromatique ayant de préférence de 8 à 20 atomes de carbone ;
(c) - un copolymère ternaire obtenu par copolymérisation d'éthylène, d'une α-oléfine ayant de préférence de 3 à 6 atomes de carbone avec un monomère diène non conjugué ayant de préférence de 6 à 12 atomes de carbone, comme par exemple les élastomères obtenus à partir d'éthylène, de propylène avec un monomère diène non conjugué du type précité tel que notamment l'hexadiène-1,4, l'éthylidène norbornène, le dicyclopentadiène ;
(d) - un copolymère d'isobutène et d'isoprène (caoutchouc butyle), ainsi que les versions halogénées, en particulier chlorées ou bromées, de ce type de copolymère.

Bien qu'elle s'applique à tout type d'élastomère diénique, l'homme du métier du pneumatique comprendra que la présente invention est en premier lieu mise en oeuvre avec des élastomères diéniques essentiellement insaturés, en particulier du type (a) ou (b) ci-dessus.

Plus préférentiellement, l'élastomère diénique est choisi dans le groupe constitué par les polybutadiènes (BR), le caoutchouc naturel (NR), les polyisoprènes de synthèse (IR), les copolymères de butadiène, les copolymères d'isoprène, et les mélanges de ces élastomères. De tels copolymères sont plus préférentiellement choisis dans le groupe constitué par les copolymères de butadiène-styrène (SBR), que ces derniers soient préparés par polymérisation en émulsion (ESBR) comme en solution (SSBR), les copolymères d'isoprène-butadiène (BIR), les copolymères d'isoprène-styrène (SIR) et les copolymères d'isoprène-butadiène-styrène (SBIR).

Les élastomères peuvent être par exemple à blocs, statistiques, séquencés, microséquencés, et être préparés en dispersion ou en solution ; ils peuvent être couplés et/ou étoilés ou encore fonctionnalisés avec un agent de couplage et/ou d'étoilage ou de fonctionnalisation. Pour un couplage à du noir de carbone, on peut citer par exemple des groupes fonctionnels comprenant une liaison C-Sn ou des groupes fonctionnels aminés tels que benzophénone par exemple ; pour un couplage à une charge inorganique renforçante telle que silice, on peut citer par exemple des groupes fonctionnels silanol ou polysiloxane ayant une extrémité silanol (tels que décrits par exemple dans US 6 013 718), des groupes alkoxysilanes (tels que décrits par exemple dans US 5 977 238), des groupes carboxyliques (tels que décrits par exemple dans US 6 815 473 ou US 2006/0089445) ou encore des groupes polyéthers (tels que décrits par exemple dans US 6 503 973). A titre d'autres exemples de tels élastomères fonctionnalisés, on peut citer également des élastomères (tels que SBR, BR, NR ou IR) du type époxydés.

Conviennent les polybutadiènes et en particulier ceux ayant une teneur (% molaire) en unités - 1,2 comprise entre 4% et 80% ou ceux ayant une teneur (% molaire) en cis-1,4 supérieure à 80%, les polyisoprènes, les copolymères de butadiène-styrène et en particulier ceux ayant une Tg (température de transition vitreuse, mesurée selon norme ASTM D3418) comprise entre 0°C et - 70°C et plus particulièrement entre - 10°C et - 60°C, et/ou une teneur en styrène comprise entre 5% et 60% en poids et plus particulièrement entre 20% et 50%, une teneur (% molaire) en liaisons -1,2 de la partie butadiénique comprise entre 4% et 75%, une teneur (% molaire) en liaisons trans-1,4 comprise entre 10% et 80%, les copolymères de butadiène-isoprène et notamment ceux ayant une teneur en isoprène comprise entre 5% et 90% en poids et une Tg de - 40°C à - 80°C, les copolymères isoprène-styrène et notamment ceux ayant une teneur en styrène comprise entre 5% et 50% en poids et une Tg comprise entre - 25°C et - 50°C. Dans le cas des copolymères de butadiène-styrène-isoprène conviennent notamment ceux ayant une teneur en styrène comprise entre 5% et 50% en poids et plus particulièrement comprise entre 10% et 40%, une teneur en isoprène comprise entre 15% et 60% en poids et plus particulièrement entre 20% et 50%, une teneur en butadiène comprise entre 5% et 50% en poids et plus particulièrement comprise entre 20% et 40%, une teneur (% molaire) en unités -1,2 de la partie butadiénique comprise entre 4% et 85%, une teneur (% molaire) en unités trans -1,4 de la partie butadiénique comprise entre 6% et 80%, une teneur (% molaire) en unités -1,2 plus -3,4 de la partie isoprénique comprise entre 5% et 70% et une teneur (% molaire) en unités trans -1,4 de la partie isoprénique comprise entre 10% et 50%, et plus généralement tout copolymère butadiène-styrène-isoprène ayant une Tg comprise entre - 20°C et - 70°C.

Selon un mode de réalisation particulier, l'élastomère diénique majoritaire en poids (en particulier pour plus de 50 pce) est un SBR, qu'il s'agisse d'un SBR préparé en émulsion ("ESBR") ou d'un SBR préparé en solution ("SSBR"), ou d'un coupage (mélange) SBR/BR, SBR/NR (ou SBR/IR), BR/NR (ou BR/IR), ou encore SBR/BR/NR (ou SBR/BR/IR). C'est le cas en particulier lorsque les compositions de l'invention sont destinées à constituer, dans les pneumatiques, les matrices de caoutchouc de certaines bandes de roulement (par exemple pour véhicules tourisme). Dans le cas d'un élastomère SBR (ESBR ou SSBR), on utilise notamment un SBR ayant une teneur en styrène moyenne, par exemple comprise entre 20% et 35% en poids, ou une teneur en styrène élevée, par exemple de 35 à 45%, une teneur en liaisons vinyliques de la partie butadiénique comprise entre 15% et 70%, une teneur (% molaire) en liaisons trans-1,4 comprise entre 15% et 75% et une Tg comprise entre - 10°C et - 55°C ; un tel SBR peut être avantageusement utilisé en mélange avec un BR possédant de préférence plus de 90% (% molaire) de liaisons cis-1,4.

Selon un autre mode de réalisation particulier, l'élastomère diénique majoritaire en poids (en particulier pour plus de 50 pce) est un élastomère isoprénique. C'est le cas en particulier lorsque les compositions de caoutchouc décrites sont destinées à constituer, dans les pneumatiques, les bandes de roulement (notamment pour véhicules industriels) ou des flancs.

Par "élastomère isoprénique", on entend de manière connue un homopolymère ou un copolymère d'isoprène, en d'autres termes un élastomère diénique choisi dans le groupe constitué par le caoutchouc naturel (NR), les polyisoprènes de synthèse (IR), les différents copolymères d'isoprène et les mélanges de ces élastomères. Parmi les copolymères d'isoprène, on citera en particulier les copolymères d'isobutène-isoprène (caoutchouc butyle - IIR), d'isoprène-styrène (SIR), d'isoprène-butadiène (BIR) ou d'isoprène-butadiène-styrène (SBIR). Cet élastomère isoprénique est de préférence du caoutchouc naturel ou un polyisoprène cis-1,4 de synthèse; parmi ces polyisoprènes de synthèse, sont utilisés de préférence des polyisoprènes ayant un taux (% molaire) de liaisons cis-1,4 supérieur à 90%, plus préférentiellement encore supérieur à 98%.

Selon un autre mode de réalisation particulier, notamment lorsqu'elle est destinée à un flanc de pneumatique, à une couche d'étanchéité de pneumatique sans chambre (ou autre élément imperméable à l'air), la composition de caoutchouc peut contenir au moins un élastomère diénique essentiellement saturé, en particulier au moins un copolymère EPDM ou un caoutchouc butyle (éventuellement chloré ou bromé), que ces copolymères soient utilisés seuls ou en mélange avec des élastomères diéniques fortement insaturés tels que cités précédemment, notamment NR ou IR, BR ou SBR.

Selon un autre mode de réalisation particulier de l'invention, la composition de caoutchouc comprend un coupage d'un (un ou plusieurs) élastomère diénique dit "à haute Tg" présentant une Tg comprise entre - 70°C et 0°C et d'un (un ou plusieurs) élastomère diénique dit "à basse Tg" comprise entre - 110°C et - 80°C, plus préférentiellement entre - 105°C et - 90°C. L'élastomère à haute Tg est choisi de préférence dans le groupe constitué par les S-SBR, les E-SBR, le caoutchouc naturel, les polyisoprènes de synthèse (présentant un taux (% molaire) d'enchaînements cis-1,4 de préférence supérieur à 95%), les BIR, les SIR, les SBIR, et les mélanges de ces élastomères. L'élastomère à basse Tg comprend de préférence des unités butadiène selon un taux (% molaire) au moins égal à 70% ; il consiste de préférence en un polybutadiène (BR) présentant un taux (% molaire) d'enchaînements cis-1,4 supérieur à 90%.

En conclusion, la composition de caoutchouc de l'invention peut contenir un seul ou plusieurs élastomères diéniques, ce dernier ou ces derniers pouvant en outre être utilisé(s) en association avec tout type d'élastomère synthétique autre que diénique, voire avec des polymères autres que des élastomères, par exemple des polymères thermoplastiques.

### 5.2 - Charge renforçante

La composition de l'invention comporte tout type de charge dite renforçante, connue pour ses capacités à renforcer une composition de caoutchouc utilisable pour la fabrication de pneumatiques, par exemple une charge organique telle que du noir de carbone, une charge inorganique renforçante telle que de la silice à laquelle est associé de manière connue un agent de couplage, ou encore un mélange de ces deux types de charge.

Une telle charge renforçante consiste typiquement en des nanoparticules dont la taille moyenne (en masse) est inférieure au micromètre, généralement inférieure à 500 nm, le plus souvent comprise entre 20 et 200 nm, en particulier et plus préférentiellement comprise entre 20 et 150 nm.

De manière préférentielle, le taux de charge renforçante totale (en particulier de la silice ou du noir de carbone ou un mélange de silice et de noir de carbone) est compris entre 30 et 150 pce. Au-delà de 150 pce, il existe un risque d'augmentation de l'hystérèse et donc de la résistance au roulement des pneumatiques. Pour cette raison, le taux de charge renforçante totale est plus préférentiellement compris dans un domaine de 40 à 120 pce.

A titre d'exemple particulièrement préférentiel, en particulier pour un usage dans une bande de roulement de pneumatique, on utilise de 40 à 150 pce, en particulier de 50 à 120 pce de noir de carbone, de silice, ou d'un mélange de silice et de noir de carbone.

Comme noirs de carbone conviennent tous les noirs de carbone, notamment les noirs conventionnellement utilisés dans les pneumatiques ou leurs bandes de roulement (noirs dits de grade pneumatique). Parmi ces derniers, on citera plus particulièrement les noirs de carbone renforçants des séries 100, 200, 300, ou les noirs de série 500, 600 ou 700 (grades ASTM), comme par exemple les noirs N115, N134, N234, N326, N330, N339, N347, N375, N550, N683, N772. Les noirs de carbone pourraient être par exemple déjà incorporés à l'élastomère diénique, notamment isoprénique sous la forme d'un masterbatch (voir par exemple demandes WO 97/36724 ou WO 99/16600).

Comme exemples de charges organiques autres que des noirs de carbone, on peut citer les charges organiques de polyvinyle fonctionnalisé telles que décrites dans les demandes WO-A-2006/069792, WO-A-2006/069793, WO-A-2008/003434 et WO-A-2008/003435.

Par "charge inorganique renforçante", doit être entendu ici toute charge inorganique ou minérale, quelles que soient sa couleur et son origine (naturelle ou de synthèse), encore appelée charge "blanche", charge "claire" ou même charge "non-noire" par opposition au noir de carbone, capable de renforcer à elle seule, sans autre moyen qu'un agent de couplage intermédiaire, une composition de caoutchouc destinée à la fabrication de bandages pneumatiques, en d'autres termes apte à remplacer, dans sa fonction de renforcement, un noir de carbone conventionnel de grade pneumatique ; une telle charge se caractérise généralement, de manière connue, par la présence de groupes hydroxyle (-OH) à sa surface.

Comme charges inorganiques renforçantes conviennent notamment des charges minérales du type siliceuse, préférentiellement la silice (SiO₂). La silice utilisée peut être toute silice renforçante connue de l'homme du métier, notamment toute silice précipitée ou pyrogénée présentant une surface BET ainsi qu'une surface spécifique CTAB toutes deux inférieures à 450 m²/g, de préférence de 30 à 400 m²/g, notamment entre 60 et 300 m²/g. A titres de silices précipitées hautement dispersibles (dites "HDS"), on citera par exemple les silices "Ultrasil" 7000 et "Ultrasil" 7005 de la société Degussa, les silices "Zeosil" 1165MP, 1135MP et 1115MP de la société Rhodia, la silice "Hi-Sil" EZ150G de la société PPG, les silices "Zeopol" 8715, 8745 et 8755 de la Société Huber.

Pour coupler la charge inorganique renforçante à l'élastomère diénique, on utilise de manière bien connue un agent de couplage (ou agent de liaison) au moins bifonctionnel destiné à assurer une connexion suffisante, de nature chimique et/ou physique, entre la charge inorganique (surface de ses particules) et l'élastomère diénique. On utilise en particulier des organosilanes ou des polyorganosiloxanes au moins bifonctionnels.

On utilise notamment des silanes polysulfurés, dits "symétriques" ou "asymétriques" selon leur structure particulière, tels que décrits par exemple dans les demandes WO03/002648 (ou US 2005/016651) et WO03/002649 (ou US 2005/016650).

Conviennent en particulier, sans que la définition ci-après soit limitative, des silanes polysulfurés répondant à la formule générale (I) suivante:

(I) Z - A - Sₓ - A - Z ,

dans laquelle:
- x est un entier de 2 à 8 (de préférence de 2 à 5) ;
- les symboles A, identiques ou différents, représentent un radical hydrocarboné divalent (de préférence un groupement alkylène en C₁-C₁₈ ou un groupement arylène en C₆-C₁₂, plus particulièrement un alkylène en C₁-C₁₀, notamment en C₁-C₄, en particulier le propylène) ;
- les symboles Z, identiques ou différents, répondent à l'une des trois formules ci-après: 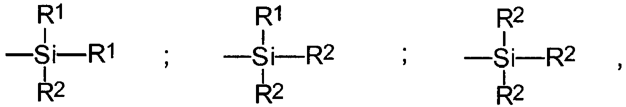 dans lesquelles:
- les radicaux R¹, substitués ou non substitués, identiques ou différents entre eux, représentent un groupe alkyle en C₁-C₁₈, cycloalkyle en C₅-C₁₈ ou aryle en C₆-C₁₈ (de préférence des groupes alkyle en C₁-C₆, cyclohexyle ou phényle, notamment des groupes alkyle en C₁-C₄, plus particulièrement le méthyle et/ou l'éthyle).
- les radicaux R², substitués ou non substitués, identiques ou différents entre eux, représentent un groupe alkoxyle en C₁-C₁₈ ou cycloalkoxyle en C₅-C₁₈ (de préférence un groupe choisi parmi alkoxyles en C₁-C₈ et cycloalkoxyles en C₅-C₈, plus préférentiellement encore un groupe choisi parmi alkoxyles en C₁-C₄, en particulier méthoxyle et éthoxyle).

Dans le cas d'un mélange d'alkoxysilanes polysulfurés répondant à la formule (I) ci-dessus, notamment des mélanges usuels disponibles commercialement, la valeur moyenne des "x" est un nombre fractionnaire de préférence compris entre 2 et 5, plus préférentiellement proche de 4. Mais l'invention peut être aussi avantageusement mise en oeuvre par exemple avec des alkoxysilanes disulfurés (x = 2).

A titre d'exemples de silanes polysulfurés, on citera plus particulièrement les polysulfures (notamment disulfures, trisulfures ou tétrasulfures) de bis-(alkoxyl(C₁-C₄)-alkyl(C₁-C₄)silyl-alkyl(C₁-C₄)), comme par exemple les polysulfures de bis(3-triméthoxysilylpropyl) ou de bis(3-triéthoxysilylpropyl). Parmi ces composés, on utilise en particulier le tétrasulfure de bis(3-triéthoxysilylpropyl), en abrégé TESPT, de formule [(C₂H₅O)₃Si(CH₂)₃S₂]₂ ou le disulfure de bis-(triéthoxysilylpropyle), en abrégé TESPD, de formule [(C₂H₅O)₃Si(CH₂)₃S]₂. On citera également à titre d'exemples préférentiels les polysulfures (notamment disulfures, trisulfures ou tétrasulfures) de bis-(monoalkoxyl(C₁-C₄)-dialkyl(C₁-C₄)silylpropyl), plus particulièrement le tétrasulfure de bis-monoéthoxydiméthylsilylpropyl tel que décrit dans la demande de brevet WO 02/083782 précitée (ou US 7 217 751).

A titre d'exemple d'agents de couplage autres qu'un alkoxysilane polysulfuré, on citera notamment des POS (polyorganosiloxanes) bifonctionnels ou encore des polysulfures d'hydroxysilane (R² = OH dans la formule I ci-dessus) tels que décrits par exemple dans les demandes de brevet WO 02/30939 (ou US 6 774 255), WO 02/31041 (ou US 2004/051210), et WO2007/061550, ou encore des silanes ou POS porteurs de groupements fonctionnels azodicarbonyle, tels que décrits par exemple dans les demandes de brevet WO 2006/125532, WO 2006/125533, WO 2006/125534.

A titre d'exemples d'autres silanes sulfurés, on citera par exemple les silanes porteurs d'au moins une fonction thiol (-SH) (dits mercaptosilanes) et/ou d'au moins une fonction thiol bloqué, tels que décrits par exemple dans les brevets ou demandes de brevet US 6 849 754, WO 99/09036, WO 2006/023815, WO 2007/098080.

Bien entendu pourraient être également utilisés des mélanges des agents de couplage précédemment décrits, comme décrit notamment dans la demande WO 2006/125534 précitée.

Dans les compositions de caoutchouc de l'invention, lorsqu'elles sont renforcées par une charge inorganique telle que silice, la teneur en agent de couplage est préférentiellement comprise entre 2 et 15 pce, plus préférentiellement entre 3 et 12 pce.

L'homme du métier comprendra qu'à titre de charge équivalente de la charge inorganique renforçante décrite dans le présent paragraphe, pourrait être utilisée une charge renforçante d'une autre nature, notamment organique telle que du noir de carbone, dès lors que cette charge renforçante serait recouverte d'une couche inorganique telle que silice, ou bien comporterait à sa surface des sites fonctionnels, notamment hydroxyles, nécessitant l'utilisation d'un agent de couplage pour établir la liaison entre la charge et l'élastomère. A titre d'exemple, on peut citer par exemple des noirs de carbone pour pneumatiques tels que décrits par exemple dans les documents brevet WO 96/37547, WO 99/28380.

Selon un autre mode de réalisation particulièrement préférentiel, on utilise comme charge majoritaire une charge inorganique renforçante, en particulier de la silice, à un taux compris dans un domaine de 70 à 120 pce, charge inorganique renforçante à laquelle peut être ajoutée avantageusement du noir de carbone à un taux minoritaire au plus égal à 15 pce, en particulier compris dans un domaine de 1 à 10 pce.

### 5.3 - Système de réticulation

Le système de réticulation est préférentiellement un système de vulcanisation, c'est-à-dire un système à base de soufre (ou d'un agent donneur de soufre) et d'un accélérateur primaire de vulcanisation. A ce système de vulcanisation de base viennent s'ajouter, incorporés au cours de la première phase non-productive et/ou au cours de la phase productive telles que décrites ultérieurement, divers accélérateurs secondaires ou activateurs de vulcanisation connus tels qu'oxyde de zinc, acide stéarique ou composés équivalents, dérivés guanidiques (en particulier diphénylguanidine).

Le soufre est utilisé à un taux préférentiel compris entre 0,5 et 12 pce, en particulier entre 1 et 10 pce. L'accélérateur primaire de vulcanisation est utilisé à un taux préférentiel compris entre 0,5 et 10 pce, plus préférentiellement compris entre 0,5 et 5,0 pce.

On peut utiliser comme accélérateur (primaire ou secondaire) tout composé susceptible d'agir comme accélérateur de vulcanisation des élastomères diéniques en présence de soufre, notamment des accélérateurs du type thiazoles ainsi que leurs dérivés, des accélérateurs de types thiurames, dithiocarbamates de zinc. Ces accélérateurs sont par exemple choisis dans le groupe constitué par disulfure de 2-mercaptobenzothiazyle (en abrégé "MBTS"), disulfure de tetrabenzylthiurame ("TBZTD"), N-cyclohexyl-2-benzothiazyle sulfénamide ("CBS"), N,N-dicyclohexyl-2-benzothiazyle sulfénamide ("DCBS"), N-ter-butyl-2-benzothiazyle sulfénamide ("TBBS"), N-ter-butyl-2-benzothiazyle sulfénimide ("TBSI"), dibenzyldithiocarbamate de zinc ("ZBEC") et les mélanges de ces composés.

### 5.4 - Antioxydant

La composition de l'invention a pour caractéristique de comporter entre 0,2 et 10 pce d'un agent antioxydant, de préférence entre 0,3 et 6 pce, plus préférentiellement dans un domaine de 0,5 à 4 pce d'un tel antioxydant.

L'antioxydant utilisé dans la composition de l'invention est tout antioxydant connu pour être efficace en empêchant le vieillissement des vulcanisats de caoutchouc attribuable à l'action de l'oxygène.

On peut citer notamment les dérivés de la para-phénylène diamine (en abrégé "PPD" ou "PPDA"), encore dénommés de manière connue para-phénylène diamines substituées, tels que par exemple la N-1,3-diméthylbutyl-N'-phényl-p-phénylène-diamine (plus connue sous le terme abrégé "6-PPD"), la N-isopropyl-N'-phényl-p-phénylènediamine (en abrégé "I-PPD"), la phényl-cyclohexyl-p-phénylène-diamine, la N,N'-di(1,4-diméthyl-pentyl)-p-phénylène-diamine, la N,N'-diaryl-p-phénylène diamine ("DTPD"), la diaryl-p-phénylène-diamine ("DAPD"), la 2,4,6-tris-(N-1,4-dimethylpentyl-p-phenylenediamino)-1,3,5-triazine, et les mélanges de telles diamines.

On peut également citer des dérivés de la quinoléine ("TMQ") tels que par exemple la 1,2-dihydro-2,2,4-triméthylquinoléine et la 6-éthoxy-1,2-dihydro-2,2,4- triméthyl-quinoléine.

On peut également citer des diphénylamines ou triphénylamines substituées, telles que décrites par exemple dans les demandes WO 2007/121936 et WO 2008/055683, en particulier la 4,4'-bis(isopropylamino)-triphénylamine, la 4,4'-bis(1,3-diméthylbutylamino)-triphénylamine, la 4,4'-bis(1,4-diméthylpentylamino)-triphénylamine.

On peut également citer des dialkylthiodipropionates ou encore des antioxydants phénoliques, notamment de la famille des 2,2'-méthylène-bis-[4-alkyle(C₁-C₁₀)-6-alkyle(C₁-C₁₂)phénols, tels que décrits notamment dans la demande WO 99/02590 précitée.

Bien entendu, dans la présente description, le terme antioxydant peut désigner à la fois un composé antioxydant unique ou un mélange de plusieurs composés antioxydants.

De préférence, l'antioxydant est choisi dans le groupe constitué par les p-phénylène diamines substituées, les diphénylamines substituées, les triphénylamines substituées, les dérivés de la quinoléine, et les mélanges de tels composés ; plus préférentiellement encore, l'antioxydant est choisi dans le groupe constitué par les p-phénylène diamines substituées et les mélanges de telles diamines.

### 5.5 - Acétylacétonate

Une caractéristique essentielle de la composition du mélange externe est qu'elle contient entre 0,2 et 10 pce d'acétylacétonate de lanthanide.

En dessous de 0,2 pce, l'effet technique visé risque d'être insuffisant, alors qu'au-delà de 10 pce, on s'expose à une augmentation des coûts et au risque de dégrader certaines propriétés mécaniques des compositions, à l'état initial comme après vieillissement. Pour ces différentes raisons, ledit taux d'acétylacétonate de lanthanide est préférentiellement compris entre 0,3 et 6 pce, encore plus préférentiellement compris dans un domaine de 0,5 à 4,0 pce.

On rappelle que le terme de "lanthanide " est réservé aux métaux, dits de "terres rares", dont le numéro atomique varie de 57 (lanthane) à 71 (lutétium).

De préférence, le lanthanide est choisi dans le groupe constitué par lanthane, cérium, praséodyme, néodyme, samarium, erbium et les mélanges de ces terres rares. On utilise plus préférentiellement le cérium, le samarium ou le néodyme, en particulier le néodyme.

On rappelle ici que les sels de lanthanide ont été essentiellement utilisés jusqu'ici comme catalyseurs de polymérisation de polymères ou élastomères tels que diènes (voir à titre d'exemples US-A-3 803 053, US-A-5 484 897, US-A-5 858 903, US-A-5 914 377, US-B-6 800 705). Ils ont également été décrits comme promoteurs d'adhésion métal/ caoutchouc dans des mélanges internes de calandrage de renforts métalliques (voir demande WO 2005/113666 précitée).

### 5.6 - Autres constituants

Les compositions de caoutchouc peuvent comporter également tout ou partie des additifs habituellement utilisés dans les compositions de caoutchouc destinées à constituer des mélanges externes d'articles finis en caoutchouc tels que des pneumatiques, comme par exemple des plastifiants ou des huiles d'extension que ces derniers soient de nature aromatique ou non-aromatique, notamment des huiles très faiblement ou non aromatiques (e.g., huiles paraffiniques, naphténiques hydrogénées, huiles MES ou TDAE), des huiles végétales, les plastifiants éthers, les plastifiants esters (par exemple les trioléates de glycérol), des charges autres que celles précitées, par exemple des charges lamellaires, des résines plastifiantes hydrocarbonées présentant une haute Tg, de préférence supérieure à 30°C, telles que décrites par exemple dans les demandes WO 2005/087859, WO 2006/061064 et WO 2007/017060, d'autres agents antidégradants ou antivieillissement tels que par exemple des antiozonants, des accélérateurs, des activateurs ou retardateurs de vulcanisation, des accepteurs et donneurs de méthylène (par exemple résorcinol, HMT ou H3M) ou autres résines renforçantes. L'homme du métier saura ajuster la formulation des compositions en fonction de ses besoins particuliers.

Les résines plastifiantes hydrocarbonées citées ci-dessus peuvent être choisies notamment dans le groupe constitué par les résines d'homopolymère ou copolymère de cyclopentadiène, les résines d'homopolymère ou copolymère de dicyclopentadiène, les résines d'homopolymère ou copolymère terpène, les résines d'homopolymères ou copolymères terpène phénol, les résines d'homopolymère ou copolymère de coupe C5, les résines d'homopolymère ou copolymère de coupe C9, les résines d'homopolymères ou copolymères d'alpha-méthyl-styrène et les mélanges de ces résines.

Les compositions de caoutchouc peuvent également contenir des activateurs de couplage lorsque qu'un agent de couplage est utilisé, des agents de recouvrement de la charge inorganique lorsqu'une charge inorganique est utilisée, ou plus généralement des agents d'aide à la mise en oeuvre susceptibles de manière connue, grâce à une amélioration de la dispersion de la charge dans la matrice de caoutchouc et à un abaissement de la viscosité des compositions, d'améliorer leur faculté de mise en oeuvre à l'état cru. Ces agents de recouvrement sont bien connus (voir par exemple les demandes de brevet WO 2006/125533, WO 2007/017060 et WO 2007/003408), on citera par exemple des hydroxysilanes ou des silanes hydrolysables tels que des hydroxysilanes, des alkylalkoxysilanes, notamment des alkyltriéthoxysilanes comme par exemple le 1-octyl-tri-éthoxysilane, des polyols (par exemple diols ou triols), des polyéthers (par exemple des polyéthylène-glycols), des amines primaires, secondaires ou tertiaires (par exemple des trialcanol-amines), des polyorgano-siloxanes hydroxylés ou hydrolysables (par exemple des α,ω-dihydroxy-poly-organosilanes (notamment des α,ω-dihydroxy-polydiméthylsiloxanes).

### 5.7 - Préparation des compositions de caoutchouc

Les compositions sont fabriquées dans des mélangeurs appropriés, en utilisant deux phases de préparation successives bien connues de l'homme du métier : une première phase de travail ou malaxage thermomécanique (phase dite "non-productive") à haute température, jusqu'à une température maximale comprise entre 110°C et 190°C, de préférence entre 130°C et 180°C, suivie d'une seconde phase de travail mécanique (phase dite "productive") jusqu'à une plus basse température, typiquement inférieure à 110°C, phase de finition au cours de laquelle est incorporé le système de réticulation.

A titre d'exemple, la phase non-productive est conduite en une seule étape thermomécanique de quelques minutes (par exemple entre 2 et 10 min) au cours de laquelle on introduit, dans un mélangeur approprié tel qu'un mélangeur interne usuel, tous les constituants de base nécessaires et autres additifs, à l'exception du système de réticulation ou vulcanisation. Après refroidissement du mélange ainsi obtenu, on incorpore alors dans un mélangeur externe tel qu'un mélangeur à cylindres, maintenu à basse température (par exemple entre 30°C et 100°C), le système de vulcanisation. L'ensemble est alors mélangé (phase productive) pendant quelques minutes (par exemple entre 5 et 15 min).

De préférence, l'acétylacétonate de lanthanide est introduit pendant la phase non-productive, en même temps que l'antioxydant. Toutefois, l'invention s'applique également au cas où la totalité ou une fraction seulement de cet acétylacétonate est introduite pendant la phase productive.

La composition finale ainsi obtenue peut ensuite être calandrée, par exemple sous la forme d'une feuille, d'une plaque ou encore extrudée, par exemple pour former un profilé de caoutchouc externe pour pneumatique tel que par exemple une bande de roulement.

La vulcanisation (ou cuisson) peut ensuite être conduite de manière connue à une température généralement comprise entre 130°C et 200°C, de préférence sous pression, pendant un temps suffisant qui peut varier par exemple entre 5 et 90 min en fonction notamment de la température de cuisson, du système de vulcanisation adopté et de la cinétique de vulcanisation de la composition considérée.

L'invention concerne les articles en caoutchouc, en particulier les pneumatiques, tant à l'état dit "cru" (i.e. avant cuisson) qu'à l'état dit "cuit" ou vulcanisé (i.e. après vulcanisation).

### 6. EXEMPLES DE REALISATION DE L'INVENTION

### 6.1 - Utilisation de la composition de caoutchouc dans un pneumatique

La composition de caoutchouc précédemment décrite est préférentiellement utilisable pour la fabrication de tout mélange externe destiné à un pneumatique pour véhicule automobile.

Par mélange "externe" ou "extérieur", on entend ici toute partie en caoutchouc du pneumatique (plus généralement d'un article en caoutchouc), qui donne sur l'extérieur dudit pneumatique, en d'autres termes qui est contact de l'air ou d'un gaz de gonflage ; à titre d'exemples, on peut citer la bande de roulement, les flancs ou encore la couche d'étanchéité du pneumatique.

Par mélange "interne" ou "intérieur", on entend a contrario toute partie en caoutchouc du pneumatique (plus généralement d'un article en caoutchouc) qui ne donne pas sur l'extérieur du bandage pneumatique, qui est sans contact avec l'air ou un gaz de gonflage, en d'autres termes qui est donc situé à l'intérieur même de la structure interne du pneumatique ; à titre d'exemples, on peut citer les mélanges de calandrage de renforts métalliques présents dans l'armature de carcasse ou l'armature de sommet du pneumatique.

A titre d'exemple, la figure unique annexée représente de manière très schématique une coupe radiale d'un pneumatique à armature de carcasse radiale conforme à l'invention, destiné par exemple à un véhicule Poids-lourd ou à un véhicule tourisme dans cette représentation générale.

Sur cette figure, le pneumatique (1) schématisé comporte une zone sommet (2) comprenant une bande de roulement (3) (pour simplifier, comportant une sculpture très simple) destinée à entrer au contact de la route, deux bourrelets inextensibles (4) dans lesquels est ancrée une armature de carcasse (6). Le sommet (2), réuni auxdits bourrelets (4) par deux flancs (5), est de manière connue en soi renforcé par une armature de sommet ou "ceinture" (7) au moins en partie métallique et radialement externe par rapport à l'armature de carcasse (6) traversant cette zone sommet (2), cette ceinture (7) étant par exemple constituée d'au moins deux nappes croisées superposées renforcées par des câbles métalliques.

L'armature de carcasse (6) est ici ancrée dans chaque bourrelet (4) par enroulement autour de deux tringles (4a, 4b), le retournement (6a, 6b) de cette armature (6) étant par exemple disposé vers l'extérieur du pneumatique (1) qui est ici représenté monté sur sa jante (9). L'armature de carcasse (6) est constituée d'au moins une nappe renforcée par des câbles textiles ou métalliques radiaux, c'est-à-dire que ces câbles sont disposés pratiquement parallèles les uns aux autres et s'étendent d'un bourrelet à l'autre de manière à former un angle compris entre 80° et 90° avec le plan circonférentiel médian (plan perpendiculaire à l'axe de rotation du pneumatique qui est situé à mi-distance des deux bourrelets 4 et passe par le milieu de l'armature de sommet 7). Bien entendu, ce pneumatique (1) comporte en outre de manière connue une couche d'étanchéité 10 qui définit la face radialement interne du pneumatique et qui est destinée à protéger la nappe de carcasse de la diffusion d'air ou autre gaz de gonflage provenant de l'espace intérieur (11) à l'enveloppe de pneumatique.

Le pneumatique conforme à l'invention a pour caractéristique essentielle de comporter dans sa structure au moins un mélange externe selon l'invention, constituant par exemple tout ou partie de la bande de roulement (3) ou des flancs (5), ou encore de la couche d'étanchéité (10).

### 6.2 - Tests de vieillissement

Pour les besoins de cet essai, quatre compositions de caoutchouc (notée ci-après C-1 à C-4) ont été préparées dont la formulation est donnée dans le tableau 1, le taux des différents produits étant exprimés en pce (parties en poids pour cent parties d'élastomère total, constitué ici soit de 100 pce de SBR, soit de 75 pce de SBR et 25 pce de BR).

Les compositions témoins (C-1 et C-3) comportent essentiellement et de manière connue, en plus de l'élastomère et de la charge renforçante (silice et noir de carbone), un agent de couplage silane, un système plastifiant constitué d'une huile et d'une résine hydrocarbonée thermoplastique, un antioxydant, oxyde de zinc, acide stéarique, dérivé guanidique, soufre et accélérateur sulfénamide. Ces compositions sont par exemple destinées à constituer la bande de roulement d'un pneumatique pour véhicule tourisme.

Les compositions selon l'invention (respectivement C-2 et C-4) se distinguent seulement des deux précédentes (respectivement C-1 et C-3) par la seule présence additionnelle de 2,0 pce de composé acétylacétonate de lanthanide (Néodyme).

Pour la fabrication de ces compositions, on a procédé de la manière suivante: on a introduit dans un mélangeur interne, dont la température initiale de cuve était d'environ 60°C, successivement la charge renforçante (silice et noir de carbone), l'élastomère diénique (SBR ou coupage SBR/BR), un antioxydant, les divers autres plastifiants, le cas échéant l'acétylacétonate, ainsi que les divers autres ingrédients à l'exception du système de vulcanisation ; le mélangeur était ainsi rempli à environ 70% (% en volume). On a conduit alors un travail thermomécanique (phase non-productive) en une étape d'environ 2 à 4 min, jusqu'à atteindre une température maximale de "tombée" de 165°C. On a récupéré le mélange ainsi obtenu, on l'a refroidit puis on a incorporé du soufre et un accélérateur type sulfénamide sur un mélangeur externe (homo-finisseur) à 30°C, en mélangeant le tout (phase productive) pendant quelques minutes.

Les compositions ainsi obtenues sont ensuite soit calandrées sous la forme de plaques (épaisseur de 2 à 3 mm) pour la mesure de leurs propriétés physiques ou mécaniques d'une part, pour la conduite des tests de vieillissement d'autre part.

Les propriétés mécaniques de ces compositions ont été reportées dans le tableau 2 annexé. Avant cuisson, on note tout d'abord que les deux compositions conformes à l'invention ont une viscosité Mooney avantageusement réduite, indicateur d'un processabilité améliorée. Après cuisson (15 min à 160°C), les quatre compositions ont des propriétés équivalentes, mis à part un allongement à la rupture qui est avantageusement supérieur en présence de l'acétylacétonate (compositions C-2 et C-4 conformes à l'invention).

Après cuisson des compositions, les blocs de caoutchouc sont placés dans une étuve à une température de 55°C, sous une humidité relative de 95%, pendant une à plusieurs semaines, ceci afin de comparer les cinétiques de réduction du taux d'antioxydant des compositions au cours de ce vieillissement accéléré. Le taux d'antioxydant a été mesuré par une technique connue de HPLC (chromatographie liquide à haute performance), d'une part à l'état initial sur les éprouvettes non vieillies, c'est-à-dire directement en sortie de cuisson, et d'autre part après vieillissement de une à six semaines.

Les résultats obtenus sont reportés dans le tableau 3 annexé. Le taux d'antioxydant dans les compositions est exprimé en unités relatives, la base 100 étant retenue pour chaque composition témoin à l'état initial (i.e., après sortie de cuisson).

A la lecture de ce tableau 3, on constate tout d'abord que, de manière inattendue, la présence de l'acétylacétonate de lanthanide permet déjà, immédiatement après cuisson (état initial), de réduire de manière sensible (environ 9%) la perte d'antioxydant présent dans la composition. En outre, après vieillissement thermique accéléré, on note que quelle que soit la durée du vieillissement, la présence de l'acétylacétonate permet de réduire de manière notable la consommation d'antioxydant au cours du temps, comparativement à la composition témoin.

Cette réduction de consommation d'antioxydant confère aux compositions de l'invention une protection améliorée contre le vieillissement thermo-oxydant comme en atteste les résultats complémentaires du tableau 4 dans lequel on a reporté l'évolution de l'allongement à la rupture, en d'autres termes la capacité du matériau à résister à une déformation en traction, en fonction du vieillissement (55°C sous humidité relative de 95%).

Les propriétés d'allongement à la rupture sont exprimées en unités relatives, la base 100 étant retenue pour chaque composition témoin à l'état initial (i.e., après sortie de cuisson). A la lecture de ce tableau 4, on constate bien que la présence de l'acétylacétonate de lanthanide permet déjà, immédiatement après cuisson (état initial), de réduire de manière sensible (environ 14%) la perte d'allongement à la rupture de la composition.

En outre, après vieillissement thermique accéléré, on note que quelle que soit la durée du vieillissement, la présence de l'acétylacétonate permet de réduire de manière notable la perte d'allongement à la rupture au cours du temps, comparativement à la composition témoin.

En conclusion, les tests de vieillissement thermique ci-dessus démontrent clairement que l'ajout de l'acétylacétonate de lanthanide, fonctionnant de ce fait comme un agent antidégradant, permet de réduire de manière sensible la consommation d'antioxydant dans les compositions de caoutchouc, offrant ainsi aux vulcanisats et donc également aux articles en caoutchouc et pneumatiques les comportant, une longévité potentiellement améliorée en raison d'une meilleure protection contre le vieillissement dû à l'oxydation.

**Tableau 1**

| Formulation des compositions de caoutchouc (en pce) : | C-1 | C-2 | C-3 | C-4 |
|---|---|---|---|---|
| élastomère diénique (1) | 100 | 100 | 75 | 75 |
| élastomère diénique (2) | - | - | 25 | 25 |
| silice (3) | 80 | 80 | 90 | 90 |
| agent de couplage silane (4) | 6.6 | 6.6 | 7.4 | 7.4 |
| noir de carbone (5) | 4 | 4 | 4 | 4 |
| huile plastifiante (6) | 20 | 20 | 10 | 10 |
| résine plastifiante (7) | 20 | 20 | 20 | 20 |
| antioxydant (8) | 2 | 2 | 2 | 2 |
| acétylacétonate de Nd (9) | - | 2 | - | 2 |
| cire anti-ozone | 1.5 | 1.5 | 1.5 | 1.5 |
| oxyde de zinc | 2 | 2 | 2 | 2 |
| acide stéarique | 2 | 2 | 2 | 2 |
| diphénylguanidine (10) | 1.5 | 1.5 | 1.5 | 1.5 |
| soufre | 1.2 | 1.2 | 1.2 | 1.2 |
| accélérateur sulfénamide (11) | 2 | 2 | 2 | 2 |

| | | | | |
|---|---|---|---|---|
| (1) SSBR avec 25% de styrène, 59% de motifs polybutadiène 1-2 et 20% de motifs polybutadiène 1-4 trans (Tg = - 24°C) ; taux exprimé en SBR sec (SBR étendu avec huile MES) ; (2) BR (Nd) avec 0,7% de 1-2 ; 1,7% de trans 1-4 ; 98% de cis 1-4 (Tg = - 105°C) ; (3) silice "Zeosil 1165 MP" de la société Rhodia sous forme de microperles (BET et CTAB : environ 150-160 m²/g). (4) TESPT ("Si69" de la société Degussa) ; (5) N234 (société Degussa) ; (6) huile MES ("Catenex SNR" de Shell) ; (7) résine polylimonène ("Dercolyte L120" de la société DRT) ; (8) N-(1,3-diméthylbutyl)-N'-phényl-p-phénylènediamine ; ("Santoflex 6PPD" de la société Flexsys); (9) C₁₅H₂₁NdO₆.xH₂O (Sigma-Aldrich - No produit 460427) ; (10) diphénylguanidine (Perkacit DPG de la société Flexsys) ; (11) N-cyclohexyl-2-benzothiazyl-sulfénamide ("Santocure CBS" de la société Flexsys). | | | | |

**Tableau 2**

| Composition N°: | C-1 | C-2 | C-3 | C-4 |
|---|---|---|---|---|
| *Propriétés avant cuisson:* | | | | |
| Mooney (UM) | 107 | 101 | 96 | 85 |
| | | | | |

| *Propriétés après cuisson:* | | | | |
|---|---|---|---|---|
| MA10 (MPa) | 6.8 | 6.5 | 5.9 | 5.2 |
| MA100 (MPa) | 2.1 | 1.6 | 2.0 | 1.6 |
| MA300 (MPa) | 2.2 | 1.7 | 2.1 | 1.7 |
| contrainte à la rupture (MPa) | 21.8 | 20.4 | 18.1 | 18.1 |
| allongement à la rupture (%) | 560 | 640 | 500 | 570 |

**Tableau 3**

| % en poids d'antioxydant dans la composition de caoutchouc (en unités relatives) : | C-1 | C-2 | C-3 | C-4 |
|---|---|---|---|---|
| Etat initial (après cuisson) | 100 | 109 | 100 | 109 |
| Après vieillissement 2 semaines | 81 | 96 | 80 | 84 |
| Après vieillissement 4 semaines | 64 | 86 | 60 | 74 |
| Après vieillissement 9 semaines | 34 | 58 | 34 | 57 |

**Tableau 4**

| Allongement à la rupture (en unités relatives) : | C-1 | C-2 | C-3 | C-4 |
|---|---|---|---|---|
| Etat initial (après cuisson) | 100 | 114 | 100 | 114 |
| Après vieillissement 2 semaines | 93 | 106 | 94 | 103 |
| Après vieillissement 4 semaines | 87 | 101 | 85 | 97 |
| Après vieillissement 9 semaines | 82 | 86 | 83 | 86 |

## Revendications

1. Article comportant au moins un mélange externe en caoutchouc, ledit mélange externe comportant une composition de caoutchouc à base d'au moins un élastomère diénique, une charge renforçante, un système de réticulation, entre 0,2 et 10 pce d'un antioxydant et entre 0,2 et 10 pce d'acétylacétonate de lanthanide.

2. Article selon la revendication 1, dans lequel l'élastomère diénique est choisi dans le groupe constitué par les polybutadiènes, le caoutchouc naturel, les polyisoprènes de synthèse, les copolymères de butadiène, les copolymères d'isoprène et les mélanges de ces élastomères.

3. Article selon la revendication 1 ou 2, dans lequel la charge renforçante est choisie dans le groupe constitué par le noir de carbone, les charges inorganiques et les mélanges de telles charges.

4. Article selon la revendication 3, dans lequel la charge renforçante est de la silice, du noir de carbone ou un mélange de silice et de noir de carbone.

5. Article selon l'une quelconque des revendications 1 à 4, dans lequel le taux de charge renforçante est compris entre 30 et 150 pce.

6. Article selon l'une quelconque des revendications 1 à 5, dans lequel le système de réticulation est à base de soufre et d'un accélérateur.

7. Article selon l'une quelconque des revendications 1 à 6, dans lequel le taux d'acétylacétonate de lanthanide est compris entre 0,3 et 6 pce.

8. Article selon la revendication 7, dans lequel le taux d'acétylacétonate de lanthanide est compris dans un domaine de 0,5 à 4,0 pce.

9. Article selon l'une quelconque des revendications 1 à 8, dans lequel le lanthanide est choisi dans le groupe constitué par lanthane, cérium, praséodyme, néodyme, samarium, erbium et les mélanges de ces terres rares.

10. Article selon la revendication 9, dans lequel le lanthanide est le néodyme.

11. Article selon l'une quelconque des revendications 1 à 10, dans lequel l'antioxydant est choisi dans le groupe constitué par les p-phénylène diamines substituées, les diphénylamines substituées, les triphénylamines substituées, les dérivés de la quinoléine, et les mélanges de tels composés.

12. Article selon la revendication 11, dans lequel l'antioxydant est choisi dans le groupe constitué par les p-phénylène diamines substituées et les mélanges de telles diamines.

13. Article selon l'une quelconque des revendications 1 à 12, dans lequel le taux d'antioxydant est compris entre 0,3 et 6 pce.

14. Article selon l'une quelconque des revendications 1 à 13, **caractérisé en ce que** ledit article est un pneumatique.

15. Pneumatique selon la revendication 14, dans lequel le mélange externe de caoutchouc est constitué par la bande de roulement dudit pneumatique.

## Patentansprüche

1. Artikel, umfassend mindestens eine externe Kautschukmischung, wobei die externe Mischung eine Kautschukzusammensetzung auf Basis von mindestens einem Dienelastomer, einem verstärkenden Füllstoff, einem Vernetzungssystem, zwischen 0,2 und 10 phe eines Antioxidans und zwischen 0,2 und 10 phe Lanthanidacetylacetonat umfasst.

2. Artikel nach Anspruch 1, wobei das Dienelastomer aus der Gruppe bestehend aus Polybutadienen, Naturkautschuk, synthetischen Polyisoprenen, Butadien-Copolymeren, Isopren-Copolymeren und Mischungen dieser Elastomere ausgewählt ist.

3. Artikel nach Anspruch 1 oder 2, wobei der verstärkende Füllstoff aus der Gruppe bestehend aus Ruß, anorganischen Füllstoffen und Mischungen dieser Füllstoffe ausgewählt ist.

4. Artikel nach Anspruch 3, wobei es sich bei dem verstärkenden Füllstoff um Kieselsäure, Ruß oder eine Mischung von Kieselsäure und Ruß handelt.

5. Artikel nach einem der Ansprüche 1 bis 4, wobei der Gehalt an verstärkendem Füllstoff zwischen 30 und 150 phe liegt.

6. Artikel nach einem der Ansprüche 1 bis 5, wobei das Vernetzungssystem auf Schwefel und einem Beschleuniger basiert.

7. Artikel nach einem der Ansprüche 1 bis 6, wobei der Gehalt an Lanthanidacetylacetonat zwischen 0,3 und 6 phe liegt.

8. Artikel nach Anspruch 7, wobei der Gehalt an Lanthanidacetylacetonat in einem Bereich von 0,5 bis 4,0 phe liegt.

9. Artikel nach einem der Ansprüche 1 bis 8, wobei das Lanthanid aus der Gruppe bestehend aus Lanthan, Cer, Praseodym, Neodym, Samarium, Erbium und Mischungen dieser Seltenerdmetalle ausgewählt ist.

10. Artikel nach Anspruch 9, wobei sich bei dem Lanthanid um Neodym handelt.

11. Artikel nach einem der Ansprüche 1 bis 10, wobei das Antioxidans aus der Gruppe bestehend aus substituierten p-Phenylendiaminen, substituierten Diphenylaminen, substituierten Triphenylaminen, Chinolinderivaten und Mischungen dieser Verbindungen ausgewählt ist.

12. Artikel nach Anspruch 11, wobei das Antioxidans aus der Gruppe bestehend aus substituierten p-Phenylendiaminen und Mischungen dieser Diamine ausgewählt ist.

13. Artikel nach einem der Ansprüche 1 bis 12, wobei der Gehalt an Antioxidans zwischen 0,3 und 6 phe liegt.

14. Artikel nach einem der Ansprüche 1 bis 13, **dadurch gekennzeichnet, dass** es sich bei dem Artikel um einen Reifen handelt.

15. Reifen nach Anspruch 14, wobei die externe Kautschukmischung aus der Lauffläche des Reifens besteht.

## Claims

1. Article comprising at least an external mixture made of rubber, the said external mixture comprising a rubber composition based on at least a diene elastomer, a reinforcing filler, a crosslinking system, between 0.2 and 10 phr of an antioxidant and between 0.2 and 10 phr of lanthanide acetylacetonate.

2. Article according to Claim 1, in which the diene elastomer is chosen from the group consisting of polybutadienes, natural rubber, synthetic polyisoprenes, butadiene copolymers, isoprene copolymers and the mixtures of these elastomers.

3. Article according to Claim 1 or 2, in which the reinforcing filler is chosen from the group consisting of carbon black, inorganic fillers and the mixtures of such fillers.

4. Article according to Claim 3, in which the reinforcing filler is silica, carbon black or a mixture of silica and carbon black.

5. Article according to any one of Claims 1 to 4, in which the level of reinforcing filler is between 30 and 150 phr.

6. Article according to any one of Claims 1 to 5, in which the crosslinking system is based on sulphur and on an accelerator.

7. Article according to any one of Claims 1 to 6, in which the level of lanthanide acetylacetonate is between 0.3 and 6 phr.

8. Article according to Claim 7, in which the level of lanthanide acetylacetonate is within a range from 0.5 to 4.0 phr.

9. Article according to any one of Claims 1 to 8, in which the lanthanide is chosen from the group consisting of lanthanum, cerium, praseodymium, neodymium, samarium, erbium and the mixtures of these rare earth metals.

10. Article according to Claim 9 , in which the lanthanide is neodymium.

11. Composition according to any one of Claims 1 to 10, in which the antioxidant is chosen from the group consisting of substituted p-phenylenediamines, substituted diphenylamines, substituted triphenylamines, quinoline derivatives and the mixtures of such compounds.

12. Article according to Claim 11, in which the antioxidant is chosen from the group consisting of substituted p-phenylenediamines and the mixtures of such diamines.

13. Article according to any one of Claims 1 to 12, in which the level of antioxidant is between 0.3 and 6 phr.

14. Article according to any one of Claims 1 to 13, **characterized in that** the said article is a tyre.

15. Tyre according to Claim 14, in which the external rubber mixture is composed of the tread of the said tyre.
